# FASCICULE DE BREVET EUROPEEN

(11) **EP 1 630 432 B1**
(45) Date de publication et mention de la délivrance du brevet: **03.12.2008**
(21) Numéro de dépôt: 05300487.5
(22) Date de dépôt: 17.06.2005
(51) Int. Cl.: F16C 11/10, B60N 2/20, B60N 2/30

(54) **Dispositif d'articulation en rotation de deux pièces d'un vehicule automobile**
Gelenkvorrichtung zur rotativen Verbindung zweier Teile eines Kraftfahrzeuges
Hinge device for rotatably fixing two motor vehicle components

(30) Priorité: 22.06.2004 FR 0406779
(43) Date de publication de la demande: 01.03.2006
(73) Titulaire: RENAULT S.A.S., 92100 Boulogne Billancourt (FR)
(72) Inventeur: Oudenard, Laurent, 92500, RUEIL MALMAISON (FR); Senez, Michael, 78400, CHATOU (FR)

(56) Documents cités:
- EP-A- 0 774 376
- DE-A1- 10 031 365
- FR-A1- 2 729 439
- FR-A1- 2 732 280
- US-A- 4 158 511
- US-A1- 2001 028 820
- US-B1- 6 260 917

## Description

La présente invention concerne un dispositif d'articulation en rotation de deux pièces d'un véhicule automobile. La présente invention concerne plus particulièrement l'articulation en rotation du dossier d'un siège de véhicule, notamment arrière, par rapport à la caisse du véhicule.

Les dossiers des sièges arrière peuvent se rabattre sur l'assise des sièges, selon un mouvement de rotation du dossier autour d'un axe, matérialisé, le plus souvent, par deux tourillons qui équipent chacun une extrémité du dossier. Les dossiers arrière sont réalisés, soit en une partie, soit en deux parties pouvant être rabattues indépendamment l'une de l'autre.

Le document FR 2729439 décrit un dispositif d'articulation et de fixation du dossier d'un siège arrière d'un véhicule, qui est simple à monter et qui évite que le dossier ne soit arraché hors de son palier, par exemple, lors d'un choc violent projetant le contenu du coffre contre le dossier.

Ce document propose l'utilisation d'un dispositif d'articulation qui comprend un support, fixé sur la caisse du véhicule, et une pièce d'ancrage ou élément de palier qui vient se clipper sur chacun des tourillons du dossier et qui forme un palier pour ce dernier. Le support comporte une gorge de montage dans laquelle peut être introduite la pièce d'ancrage. La pièce d'ancrage est une agrafe déformable, de manière élastique, qui comporte des moyens de fixation qui viennent en butée contre des moyens de retenue disposés au niveau de la gorge de montage du support.

Le montage de ce dispositif est tel que suit. On introduit un tourillon dans la pièce d'ancrage, le tourillon vient se placer dans la partie formant un palier et peut donc tourner librement dans la pièce d'ancrage. On introduit ensuite, en force, l'ensemble tourillon-pièce d'ancrage dans la gorge du support. La déformation élastique de la pièce d'ancrage permet de fixer l'ensemble précité sur le support.

Le montage qui semble pourtant aisé, n'est, en réalité, pas si simple, du fait de la libre rotation de la pièce d'ancrage autour des tourillons. Il faut, en effet, sans cesse vérifier le bon positionnement de la pièce d'ancrage qui est mobile sur le tourillon. Ceci est en particulier gênant dans un montage automatisé.

Le but de la présente invention est de proposer un dispositif d'articulation de deux pièces d'un véhicule automobile du type précité, qui assure une bonne résistance à l'arrachement et dont le montage est aisé.

Ce but est atteint au moyen d'un dispositif d'articulation en rotation d'une première et d'une seconde pièce d'un véhicule automobile, du type comportant, de manière connue :
- un axe solidaire de la première pièce,
- un support apte à être fixé sur la seconde pièce et comportant une gorge de montage de l'axe ; et
- un élément de palier pouvant être monté sur l'axe pour être inséré dans la gorge de montage et comportant des moyens élastiques de fixation qui coopèrent avec des moyens associés de retenue, disposés sur la gorge de montage. De manière caractéristique, selon l'invention, le dispositif comporte des moyens de blocage en rotation, pouvant être forcés, qui empêchent la libre rotation de l'axe dans l'élément de palier, lorsque ce dernier est monté sur l'axe, l'axe pouvant néanmoins tourner dans l'élément de palier quand une force supérieure à une valeur donnée lui est appliquée.

L'assemblage des deux pièces au moyen du dispositif de l'invention est ainsi simplifié du fait du blocage de l'élément de palier sur l'axe de la première pièce.

Les moyens de blocage en rotation ne sont pas limités selon l'invention. Selon un mode de réalisation particulier, les moyens de blocage en rotation comportent au moins un bossage disposé sur l'élément de palier
ou sur l'axe.

Un bossage peut, en effet, à lui seul bloquer la libre rotation de l'élément de palier autour de l'axe. Le déblocage de l'axe peut, par exemple, être mis en oeuvre en déplaçant l'axe dans le palier formé par l'élément de palier.

Selon une variante de réalisation, les moyens de blocage en rotation comportent une rainure ménagée dans l'axe ou dans l'élément de palier et qui coopère avec le bossage. Le blocage se fait par butée, le bossage étant logé dans la rainure. Les moyens de blocage en rotation sont forcés en désengageant le bossage hors de la rainure.

Selon un autre mode de réalisation, les moyens de blocage en rotation comportent un trou ménagé dans l'axe, une encoche ménagée sur l'élément de palier et une goupille cassable qui coopère avec le trou et l'encoche. Dans ce cas, le blocage en rotation n'est obtenu que lors du montage des deux pièces, la goupille étant cassée par la suite, elle ne peut plus assurer le blocage de l'axe dans l'élément de palier.

Selon un mode de réalisation particulier de l'élément de palier, il comporte deux pattes de démontage accessibles lorsque l'élément de palier, monté sur l'axe, est fixé sur le support, qui engendrent la déformation élastique de l'élément de palier lorsqu'elles sont rapprochées l'une de l'autre, de manière à dégager les moyens élastiques de fixation de l'élément de palier des moyens associés de retenue associés du support.

L'élément de palier peut être moins partiellement recouvert d'un matériau amortissant afin d'éviter les problèmes de grincement lors de la rotation de l'axe dans l'élément de palier.

Selon un mode de réalisation particulier, les moyens élastiques de fixation de l'élément de palier comportent au moins deux ergots de fixation s'étendant dans un plan sensiblement perpendiculaire à l'axe et à la gorge, les moyens de retenue associés comportant au moins deux encoches, chacune des encoches étant sensiblement perpendiculaire à la gorge et conformée de manière à ce qu'un des ergots de fixation vient s'encliqueter dans l'encoche lorsque l'élément de palier reprend sa forme de manière élastique, les encoches formant butée pour les ergots, selon une direction perpendiculaire à l'axe, lorsque l'élément de palier, monté sur l'axe, est fixé au support.

L'élément de palier peut être réalisé, partiellement ou entièrement, en tôle métallique ou en matière plastique

Selon un mode de réalisation particulier, l'élément de palier comporte une partie centrale formant palier pour l'axe, la partie centrale ayant une forme d'anneau ouvert selon une fente longitudinale qui permet par déformation élastique, l'insertion de l'axe dans la partie centrale.

Le dispositif de l'invention peut s'appliquer, de manière avantageuse, à un élément de siège, notamment un dossier de siège arrière de véhicule automobile la seconde pièce étant une partie de la structure d'un véhicule automobile, notamment la caisse.

La présente invention, ses caractéristiques et les divers avantages qu'elle procure apparaîtront mieux à la lecture de la description qui suit d'un exemple particulier de réalisation de la présente invention et qui fait référence aux dessins annexés sur lesquels :
- la figure 1 représente une vue en perspective d'une partie d'un mode de réalisation particulier de l'invention ;
- la figure 2 représente une vue en coupe transversale à l'axe, du mode de réalisation représenté sur la figure 1, l'élément de palier étant monté sur l'axe et sur le support ; et
- la figure 3 représente une vue en perspective du dessus, la première pièce étant fixée sur la seconde pièce au moyen du dispositif selon l'invention représenté sur les figures 1 et 2.

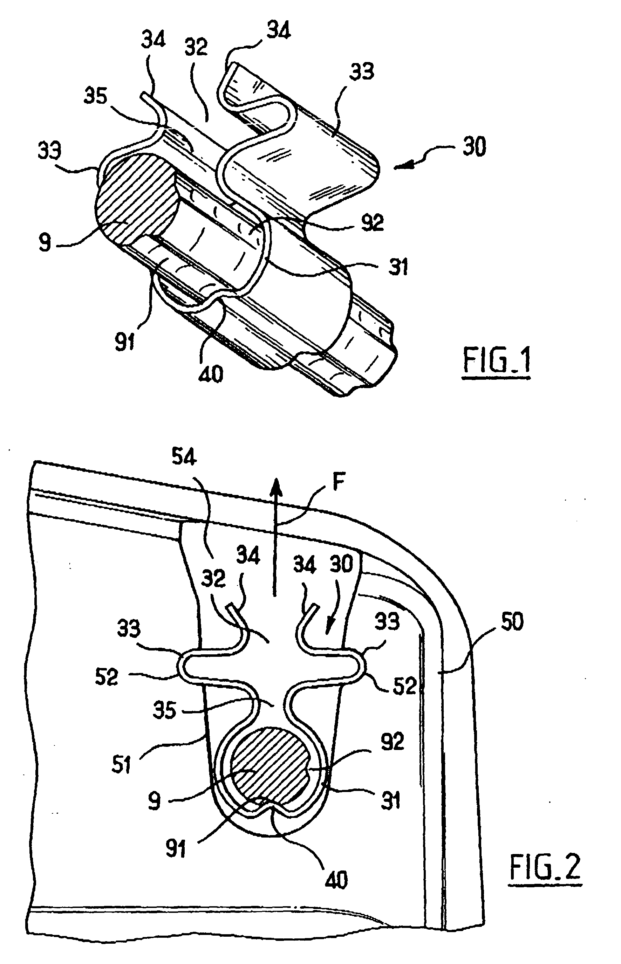

En référence à la figure 1, le dispositif de l'invention comporte un élément de palier 30 et un axe 9 qui peut être, par exemple, un tourillon. L'élément de palier 30 comporte une partie centrale 31 qui forme un anneau ouvert selon une fente 32, parallèle à l'axe 9. Deux ergots 33 sont disposés, sur la figure 1, au-dessus de la partie centrale 31. Les deux ergots 33 s'étendent à la fois dans un plan parallèle à l'axe 9 et dans un plan perpendiculaire à ce dernier. Les deux ergots 33 sont formés, par exemple, par pliage lorsque l'élément de palier 30 est réalisé en tôle. Deux pattes de démontage 34 prolongent les ergots 33 et s'étendent dans le prolongement de la partie centrale 31. Ces deux pattes de démontage 34 sont opposées l'une à l'autre et espacées l'une de l'autre formant ainsi une fente 35.

La partie centrale 31 de l'élément de palier 30 comporte un bossage longitudinal 40, qui peut coopérer avec une première et une seconde rainure 91, 92 ménagées sur l'axe 9. Lorsque le bossage 40 est logé dans la rainure 91 ou 92, l'axe 9 ne peut pas tourner librement dans la partie centrale 31 qui forme un palier pour l'axe 9. En revanche, si l'on applique une force sur l'axe 9, il est possible de sortir le bossage 40 hors de la rainure 91 ou 92, rendant ainsi possible la rotation de l'axe 9 dans la partie centrale 31 de l'élément de palier 30.

La présence des deux rainures permet de monter le dispositif de l'invention alors que la première pièce qui est fixe par rapport à l'axe 9, est soit dans une première position (bossage 40 engagé dans la rainure 91), soit dans une seconde position (bossage 40 engagé dans la rainure 92) ce qui facilite encore le montage du dispositif de l'invention.

Selon une variante non représentée, le bossage est disposé sur l'axe 9 et les rainures 91 et 92 sont ménagées dans la partie centrale 31 de l'élément de palier 30. Cette rainure ou ces rainures peuvent également, dans ce cas, être remplacée par une ou deux encoches.

Au moins la partie centrale 31 de l'élément de palier 30 est recouverte d'un matériau amortissant pour éliminer les risques de grincements provenant de la rotation de l'axe 9 dans la partie centrale 31.

En référence à la figure 2, le dispositif de l'invention comporte également un support 50 qui comprend une gorge de montage 51 formant une ouverture 54 à travers laquelle peut être inséré l'élément de palier 30. Lorsque l'élément de palier 30, monté sur l'axe 9, est fixé sur le support 50, les ergots 33 coopèrent avec des encoches 52 ménagées au niveau de la gorge 51. Les ergots 33 et les encoches 52 permettent d'assurer une bonne résistance à l'arrachement (c'est-à-dire une force représentée par la flèche F).

Le montage du dispositif de l'invention est tel que suit (voir figure 2, notamment). L'élément de palier 30 est tout d'abord monté sur l'arbre 9, en introduisant en force l'arbre 9 dans la fente 35 puis dans la fente 32. L'axe 9 vient ainsi se loger dans la partie centrale 31. A ce stade, il est important de faire coïncider soit la première rainure 91 soit la seconde 92 avec le bossage 40, afin de bloquer la libre rotation de l'axe 9 dans l'élément de palier 30 ou plutôt la rotation libre de l'élément de palier 30 autour de l'axe 9. L'élément de palier 30, monté sur l'axe 9, est ensuite fixé sur le support 50, par déformation élastique. L'élément de palier 30 est entré en force dans la gorge 51. Lorsque les ergots 33 pénètrent dans les encoches 52, l'élément de palier 30 reprend sa forme initiale et se trouve bloqué dans la gorge 51, les ergots 33 venant en butée contre les encoches 52.

Le montage du dispositif de l'invention est aisé car il suffit de maintenir la première pièce qui comprend l'axe 9 ; l'élément de palier 30 étant bloqué sur l'axe 9, il ne peut bouger du fait du déplacement de la première pièce vers le support 50. L'élément de palier 30 peut ensuite être facilement entré en force dans la gorge 51, comme précédemment expliqué.

Le bossage 40 permet de donner des informations tactiles à l'utilisateur qui bascule la première pièce par rapport à la seconde pièce. En effet, l'utilisateur perçoit alors l'encliquetage du bossage dans la rainure 91 ou 92, ce qui lui indique que la position désirée est atteinte. Ainsi, la seconde rainure 92 à environ 90° de la première 91, permet d'indiquer, de manière tactile, à l'utilisateur qu'il a atteint la position repliée de la première pièce (par exemple du dossier du siège d'un véhicule) par rapport à la seconde pièce (par exemple, l'assise du siège).

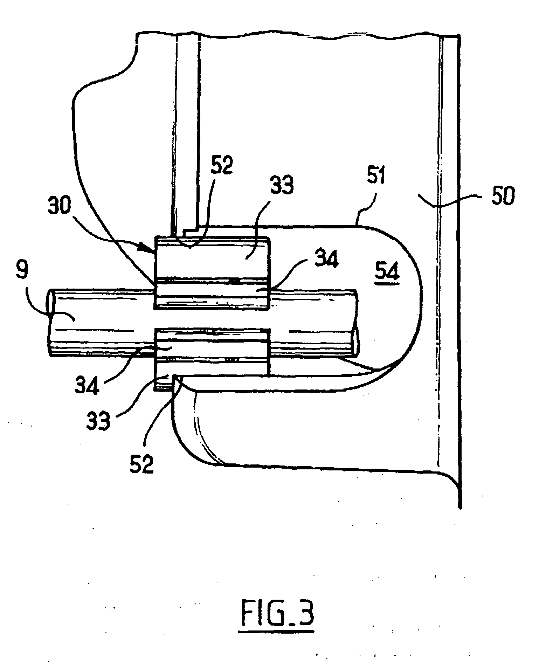

En référence aux figures 2 et 3, les pattes de démontage 34 restent accessibles à travers l'ouverture 54 de la gorge 51. Ainsi, il est facile d'introduire un outil, tel que par exemple, une pince qui permet de rapprocher les pattes de démontage 34 l'une de l'autre, engendrant ainsi la déformation élastique de l'élément de palier 30, ce qui permet de retirer les ergots 33 des encoches 52 et donc de retirer l'élément de palier 30 du support 50.

Selon un mode de réalisation non représenté, seul l'élément de palier ou l'axe comporte un bossage. La seule présence de ce bossage permet de caler l'axe et d'empêcher sa libre rotation dans l'élément de palier. Ce bossage peut aussi être remplacé par une patte formée par pliage, par exemple, dans l'élément de palier, quand celui-ci est réalisé en tôle.

Selon un autre mode de réalisation non représenté, les moyens de blocage en rotation, qui peuvent être forcés, comportent un trou ménagé dans l'axe et une encoche prévue dans la partie centrale de l'élément de fixation. Une goupille, en matière plastique, facilement cassable, est introduite dans le trou, à travers l'encoche afin de bloquer l'axe en rotation. Lorsque l'utilisateur met en mouvement la première pièce par rapport à la seconde, il ressent une résistance venant de la goupille. S'il exerce une force supérieure à une valeur donnée (de l'ordre de quelques kilos, par exemple), la goupille se brise et autorise le mouvement de rotation de la première pièce. Dans ce cas, l'utilisateur ne percevra plus d'information tactile lors des utilisations ultérieures du dispositif de l'invention, les moyens de blocage en rotation ne pouvant bloquer qu'une seule fois l'axe, lors du montage du dispositif de l'invention.

## Revendications

1. Dispositif d'articulation en rotation d'une première et d'une seconde pièce d'un véhicule automobile, comportant :
- un axe (9) solidaire de ladite première pièce,
- un support (50) apte à être fixé sur ladite seconde pièce et comportant une gorge de montage (51) dudit axe (9) ; et
- un élément de palier (30) pouvant être monté sur ledit axe (9) pour être inséré dans ladite gorge de montage (51) et comportant des moyens élastiques de fixation (33) qui coopèrent avec des moyens associés de retenue (52) disposés sur ladite gorge de montage (51), **caractérisé en ce qu'**il comporte des moyens de blocage en rotation (40, 91, 92), pouvant être forcés, qui empêchent la libre rotation dudit axe (9) dans ledit élément de palier (30), lorsque ledit élément de palier (30) est monté sur ledit axe (9), ledit axe (9) pouvant néanmoins tourner dans ledit élément de palier (30) quand une force supérieure à une valeur donnée lui est appliquée.

2. Dispositif selon la revendication 1, **caractérisé en ce que** lesdits moyens de blocage en rotation comportent au moins un bossage (40) disposé sur ledit élément de palier (30) ou sur ledit axe (9).

3. Dispositif selon la revendication 2, **caractérisé en ce que** lesdits moyens de blocage en rotation comportent au moins une rainure (91 ; 92) ménagée dans ledit axe (9) ou dans ledit élément de palier (30) et qui coopère avec ledit bossage (40).

4. Dispositif selon l'une quelconque des revendications 1 à 3, **caractérisé en ce que** lesdits moyens de blocage en rotation comportent un trou ménagé dans ledit axe(9), une encoche ménagée sur ledit élément de palier (30) et une goupille cassable qui coopère avec ledit trou et ladite encoche.

5. Dispositif selon l'une quelconque des revendications 1 à 4, **caractérisé en ce que** ledit élément de palier comporte deux pattes de démontage (34), accessibles lorsque ledit élément de palier (30), monté sur ledit axe(9), est fixé sur ledit support (50), qui engendrent la déformation élastique dudit élément de palier (30), lorsqu'elles sont rapprochées l'une de l'autre de manière à dégager lesdits moyens élastiques de fixation (33) dudit élément de palier (30) desdits moyens associés de retenue (52) dudit support (50).

6. Dispositif de fixation selon l'une quelconque des revendications 1 à 5, **caractérisé en ce que** ledit élément de palier (30) est au moins partiellement recouvert d'un matériau amortissant.

7. Dispositif de fixation selon l'une quelconque des revendications 1 à 6, **caractérisé en ce que** lesdits moyens élastiques de fixation dudit élément de palier (30) comportent au moins deux ergots de fixation (33) s'étendant dans un plan sensiblement perpendiculaire audit axe (9) et à ladite gorge de montage (51), les moyens de retenue associés comportant au moins deux encoches (52), chacune desdites encoches (52) étant sensiblement perpendiculaire à ladite gorge de montage (51) et conformée de manière à ce qu'un desdits ergots de fixation (33) vient s'encliqueter dans ladite encoche (52) lorsque ledit élément de palier (30) reprend sa forme de manière élastique, dans ladite gorge de montage (51), lesdites encoches (52) formant butée pour lesdits ergots de fixation (33), selon une direction perpendiculaire audit axe (9), lorsque ledit élément de palier (30), monté sur ledit axe (9), est fixé audit support (50).

8. Dispositif selon l'une quelconque des revendications 1 à 7, **caractérisé en ce que** ledit élément de palier (30) est réalisé en tôle.

9. Dispositif de fixation selon l'une quelconque des revendications 1 à 8, **caractérisé en ce que** ledit élément de palier (30) comporte une partie centrale (31) formant palier pour ledit axe (9), ladite partie centrale (31) ayant une forme d'anneau ouvert selon une fente (35) longitudinale qui permet par déformation élastique, l'insertion dudit axe (9) dans ladite partie centrale (31).

10. Dispositif de fixation selon l'une quelconque des revendications 1 à 9, **caractérisé en ce que** ladite première pièce est un élément de siège, notamment un dossier de siège arrière de véhicule automobile et **en ce que** ladite seconde pièce est une partie de la structure d'un véhicule automobile, notamment la caisse.

## Claims

1. Device for rotationally articulating a first and second part of a motor vehicle, comprising:
- a stud (9) secured to the said first part,
- a support (50) designed to be fastened to the said second part and comprising a channel (51) for mounting the said stud (9); and
- a bearing element (30) which can be mounted on the said stud (9) in order to be inserted into the said mounting channel (51) and which comprises elastic fastening means (33) which cooperate with associated retaining means (52) arranged on the said mounting channel (51), **characterized in that** it comprises rotation-prohibiting means (40, 91, 92), which can be forced, which prevent the free rotation of the said stud (9) in the said bearing element (30) when the said bearing element (30) is mounted on the said stud (9), the said stud (9) being capable nevertheless of turning in the said bearing element (30) when a force above a given value is applied to it.

2. Device according to Claim 1, **characterized in that** the said rotation-prohibiting means comprise at least one boss (40) arranged on the said bearing element (30) or on the said stud (9).

3. Device according to Claim 2, **characterized in that** the said rotation-prohibiting means comprise at least one groove (91; 92) formed in the said stud (9) or in the said bearing element (30) and cooperating with the said boss (40).

4. Device according to any one of Claims 1 to 3, **characterized in that** the said rotation-prohibiting means comprise a hole formed in the said stud (9), a notch formed in the said bearing element (30) and a breakable pin which cooperates with the said hole and the said notch.

5. Device according to any one of Claims 1 to 4, **characterized in that** the said bearing element comprises two disassembly tabs (34) which are accessible when the said bearing element (30), mounted on the said stud (9), is fastened to the said support (50), these tabs causing the said bearing element (30) to deform elastically when they are moved towards one another so as to disengage the said elastic fastening means (33) of the said bearing element (30) from the said associated retaining means (52) of the said support (50).

6. Fastening device according to any one of Claims 1 to 5, **characterized in that** the said bearing element (30) is at least partially covered with a damping material.

7. Fastening device according to any one of Claims 1 to 6, **characterized in that** the said elastic fastening means of the said bearing element (30) comprise at least two fastening lugs (33) which extend in a plane substantially perpendicular to the said stud (9) and to the said mounting channel (51), the associated retaining means comprising at least two notches (52), each of the said notches (52) being substantially perpendicular to the said mounting channel (51) and configured such that one of the said fastening lugs (33) snaps into the said notch (52) when the said bearing element (30) elastically assumes its shape within the said mounting channel (51), the said notches (52) forming an abutment for the said fastening lugs (33), in a direction perpendicular to the said stud (9), when the said bearing element (30), mounted on the said stud (9), is fastened to the said support (50).

8. Device according to any one of Claims 1 to 7, **characterized in that** the said bearing element (30) is made of sheet metal.

9. Fastening device according to any one of Claims 1 to 8, **characterized in that** the said bearing element (30) comprises a central portion (31) forming a bearing for the said stud (9), the said central portion (31) being in the form of a ring which is open by way of a longitudinal slot (35) and which makes it possible, by elastic deformation, for the said stud (9) to be inserted into the said central portion (31).

10. Fastening device according to any one of Claims 1 to 9, **characterized in that** the said first part is a seat element, in particular a rear seat back of a motor vehicle, and **in that** the said second part is part of the structure of a motor vehicle, in particular the body shell.

## Patentansprüche

1. Drehgelenkvorrichtung zwischen einem ersten und einem zweiten Teil eines Kraftfahrzeugs, mit:
- einer Welle (9), die mit dem ersten Teil fest verbunden ist,
- einem Träger (50), der an dem zweiten Teil befestigt werden kann und eine Nut (51) für die Montage der Welle (9) aufweist; und
- einem Lagerelement (30), das an der Welle (9) angebracht werden kann, um in die Montagenut (51) eingesetzt zu werden, und elastische Befestigungsmittel (33) aufweist, die mit zugeordneten Haltemitteln (52) zusammenwirken, die an der Montagenut (51) angeordnet sind, **dadurch gekennzeichnet, dass** sie Drehblockiermittel (40, 91, 92) aufweist, die mit Kraft beaufschlagt werden können und die freie Drehung der Welle (9) in dem Lagerelement (30) verhindern, wenn das Lagerelement (30) an der Welle (9) montiert ist, wobei sich die Welle (9) dennoch in dem Lagerelement (30) drehen kann, wenn auf sie eine Kraft ausgeübt wird, die einen gegebenen Wert übersteigt.

2. Vorrichtung nach Anspruch 1, **dadurch gekennzeichnet, dass** die Drehblockiermittel wenigstens eine Erhebung (40) aufweisen, die an dem Lagerelement (30) oder an der Welle (9) angeordnet ist.

3. Vorrichtung nach Anspruch 2, **dadurch gekennzeichnet, dass** die Drehblockiermittel wenigstens eine Rille (91; 92) aufweisen, die in der Welle (9) oder in dem Lagerelement (30) ausgebildet ist und mit der Erhebung (40) zusammenwirkt.

4. Vorrichtung nach einem der Ansprüche 1 bis 3, **dadurch gekennzeichnet, dass** die Drehblockiermittel ein in der Welle (9) ausgebildetes Loch, eine an dem Lagerelement (30) ausgebildete Kerbe und einen zerbrechbaren Zapfen, der mit dem Loch und mit der Kerbe zusammenwirkt, aufweisen.

5. Vorrichtung nach einem der Ansprüche 1 bis 4, **dadurch gekennzeichnet, dass** das Lagerelement zwei Demontageansätze (34) aufweist, auf die zugegriffen werden kann, wenn das Lagerelement (30), das an der Welle (9) angebracht ist, an dem Träger (50) befestigt wird, und die die elastische Verformung des Lagerelements (30) zur Folge haben, wenn sie einander angenähert werden, um die elastischen Befestigungsmittel (33) des Lagerelements (30) von den zugeordneten Haltemitteln (52) des Trägers (50) zu lösen.

6. Befestigungsvorrichtung nach einem der Ansprüche 1 bis 5, **dadurch gekennzeichnet, dass** das Lagerelement (30) wenigstens teilweise mit einem Dämpfungsmaterial abgedeckt ist.

7. Befestigungsvorrichtung nach einem der Ansprüche 1 bis 6, **dadurch gekennzeichnet, dass** die elastischen Befestigungsmittel des Lagerelements (30) wenigstens zwei Befestigungsvorsprünge (33) aufweisen, die sich in einer zu der Welle (9) und zu der Montagenut (51) im Wesentlichen senkrechten Ebene erstrecken, wobei die zugeordneten Haltemittel wenigstens zwei Kerben (52) aufweisen, wobei jede der Kerben (52) zu der Montagenut (51) im Wesentlichen senkrecht ist und in der Weise beschaffen ist, dass einer der Befestigungsvorsprünge (33) in der Kerbe (52) einrastet, wenn das Lagerelement (30) in der Montagenut (51) seine Form elastisch wieder annimmt, wobei die Kerben (52) für die Befestigungsvorsprünge (33) in einer zu der Welle (9) senkrechten Richtung einen Anschlag bilden, wenn das Lagerelement (30), das an der Welle (9) angebracht ist, an dem Träger (50) befestigt ist.

8. Vorrichtung nach einem der Ansprüche 1 bis 7, **dadurch gekennzeichnet, dass** das Lagerelement (30) aus Blech hergestellt ist.

9. Befestigungsvorrichtung nach einem der Ansprüche 1 bis 8, **dadurch gekennzeichnet, dass** das Lagerelement (30) einen Mittelteil (31) aufweist, der das Lager für die Welle (9) bildet, wobei der Mittelteil (31) die Form eines Rings hat, der längs eines longitudinalen Schlitzes (35) offen ist und durch elastische Verformung das Einsetzen der Welle (9) in den Mittelteil (31) ermöglicht.

10. Befestigungsvorrichtung nach einem der Ansprüche 1 bis 9, **dadurch gekennzeichnet, dass** das erste Teil ein Sitzelement, insbesondere eine Rücksitzlehne eines Kraftfahrzeugs ist und dass das zweite Teil ein Teil des Aufbaus eines Kraftfahrzeugs, insbesondere der Karosserie ist.
